# EUROPÄISCHE PATENTSCHRIFT

(11) **EP 1 382 816 B1**
(45) Veröffentlichungstag und Bekanntmachung des Hinweises auf die Patenterteilung: **05.08.2009**
(21) Anmeldenummer: 03010081.2
(22) Anmeldetag: 03.05.2003
(51) Int. Cl.: F02B 67/10, F02B 37/007, F02B 37/18, F02C 6/12, F01D 25/30

(54) **Anordnung zumindest zweier Abgasturbolader**
Arrangement of at least two turbo compressors
Agencement de au moins deux turbocompresseurs

(30) Priorität: 19.07.2002 DE 10232738
(43) Veröffentlichungstag der Anmeldung: 21.01.2004
(73) Patentinhaber: AUDI AG, 85045 Ingolstadt (DE)
(72) Erfinder: Zimmer, Marko, 85057 Ingolstadt (DE); Rudolph, Hans-Jürgen, 86633 Neuburg (DE)

(56) Entgegenhaltungen:
- EP-A- 0 972 926
- DE-A1- 3 629 841
- US-A- 1 310 682
- PATENT ABSTRACTS OF JAPAN Bd. 014, Nr. 107 (M-0942), 27. Februar 1990 (1990-02-27) & JP 01 310136 A (MAZDA MOTOR CORP), 14. Dezember 1989 (1989-12-14)
- PATENT ABSTRACTS OF JAPAN Bd. 009, Nr. 011 (M-351), 18. Januar 1985 (1985-01-18) & JP 59 160027 A (MAZDA KK), 10. September 1984 (1984-09-10)
- PATENT ABSTRACTS OF JAPAN Bd. 009, Nr. 272 (M-425), 30. Oktober 1985 (1985-10-30) & JP 60 116821 A (HINO JIDOSHA KOGYO KK), 24. Juni 1985 (1985-06-24)

## Beschreibung

Die Erfindung betrifft eine Anordnung zumindest zweier Abgasturbolader an einer Brennkraftmaschine, insbesondere in einem Kraftfahrzeug, gemäß dem Oberbegriff des Patentanspruches 1.

Eine derartige Anordnung zeigt die DE 198 22 874 A1, bei der die beiden zu einer Baueinheit zusammengegossenen Turbinengehäuse parallel zueinander angeordnet sind, so dass die Antriebswellen jeweils zwischen Abgasturbine und Verdichter-Laufrad ebenfalls parallel verlaufen. Die beiden Einströmkanäle der Abgasturbinengehäuse sind zusammengeführt, wobei der eine Einströmkanal über ein integriertes Ventil so steuerbar ist, dass bei geringeren Abgasströmen zunächst nur der eine Abgasturbolader beaufschlagt wird, während der zweite Abgasturbolader bei höheren Abgasmassenströmen dazu geschaltet wird.

Eine weitere Anordnung mit zwei Abgasturboladern ist in US 1 310 682 A gezeigt.

Ferner zeigt die DE 199 48 220 A1 eine weitere Anordnung zumindest zweier Abgasturbolader an einer Brennkraftmaschine, bei der zwar die Antriebswellen zwischen den Abgasturbinen und den Verdichter-Laufrädern eine gemeinsame Drehachse besitzen, deren Aufbau jedoch relativ kompliziert ist. Dabei sind in eher herkömmlicher Bauart zwei Abgasturbolader hintereinander geschaltet. Gemäß dem bekannten Vorschlag weist ein erster Abgasturbolader eine hohle Antriebswelle auf, durch die hindurch die Antriebswelle eines zweiten Abgasturboladers verläuft.

Aufgabe der Erfindung ist es, eine Anordnung der gattungsgemäßen Art vorzuschlagen, die baulich günstig an eine Brennkraftmaschine anbaubar ist, die fertigungstechnische Vorteile bietet und die ein wirkungsvolles, schnell ansprechendes Turboladersystem darstellt.

Diese Aufgabe wird erfindungsgemäß mit den kennzeichnenden Merkmalen des Patentanspruches 1 gelöst. Vorteilhafte Weiterbildungen der Erfindung geben die weiteren Patentansprüche an.

Erfindungsgemäß wird vorgeschlagen, dass die Turbinengehäuse derart ausgerichtet sind, dass die Antriebswellen zumindest im wesentlichen in einer Flucht zueinander liegen und dass die Lagergehäuse beiderseits an die Turbinengehäuse anschließen. Die Bypassleitungen und die Bypassventile sind unmittelbar in die Turbinengehäuse integriert.Bevorzugt können dabei die Turbinengehäuse zu einer Baueinheit zusammengegossen sein.

Daraus resultiert in vorteilhafter Weise ein baulich gedrängtes, robustes Turbinengehäuse - das durchaus auch mehrteilig hergestellt sein könnte - mit geringen Massen, wodurch sich beträchtliche Gewichtsvorteile und eine Verbesserung der Abgasemissionen der Abgasturbolader aufgrund geringerer Temperaturverluste ergeben.

Ferner ergibt sich insbesondere bei Reihen-Brennkraftmaschinen eine günstige Anordnung entlang der Längsperipherie der Brennkraftmaschine mit relativ freier Ausrichtung der an die entsprechenden Ein- und Ausströmkanäle des Abgases und der Verbrennungsluft angrenzenden Anschlussflansche. Die beiderseits angrenzenden Lagergehäuse und Verdichtergehäuse können ggf. als Gleichteile ausgeführt sein, die lediglich auf Umschlag an die Turbinengehäuse anmontiert werden.

Schließlich ergeben sich auch fertigungstechnische Vorteile wie verkürzte Werkzeugmaschinen-Richtzeiten und Bearbeitungszeiten, insbesondere wenn die besagten Antriebswellen zwischen den Abgasturbinen und den Verdichter-Laufrädern exakt in einer Flucht liegen.

Ferner wird vorgeschlagen, bei der Anordnung und Anbindung der Einströmkanäle der Abgasturbolader und insbesondere bei einer Vierzylinder-Reihenbrennkraftmaschine nach dem Stoßladeprinzip zu verfahren, indem bei getrennten Abgasanschlüssen jeweils bestimmte Zylinder der Brennkraftmaschine auf den einen und den anderen der Abgasturbolader geschaltet sind. Dies ermöglicht ein nahezu optimales Ansprechen der Abgasturbolader schon bei niedrigen Drehzahlen und Lasten der Brennkraftmaschine.

Die Regelung des Ladedruckes kann dabei je nach gewähltem baulichem Aufwand getrennt über zwei Bypassventile oder einheitlich über ein Bypassventil bewerkstelligt werden. Eine gemeinsame Ladedruckregelung ist unter Berücksichtigung des baulichen Aufwandes zu bevorzugen, während eine getrennte Ladedruckregelung individuellere Eingriffe in die Motorsteuerung unter Berücksichtigung von Leistungs- und Abgasreinigungskriterien eröffnet.

Zwei Ausführungsbeispiele der Erfindung sind im Folgenden anhand der beiliegenden Zeichnung und mit weiteren Einzelheiten näher beschrieben.

Es zeigen:
Fig. 1 in schematischer Darstellung eine Anordnung zweier Abgasturbolader mit einheitlichem Turbinengehäuse für eine Vierzylinder-Brennkraftmaschine in einem teilweisen Längsschnitt; und
Fig. 2 das einheitliche Turbinengehäuse für eine modifizierte Anordnung gemäß Fig. 1 mit in das Turbinengehäuse integrierte Bypassleitungen und einem Bypassventil.

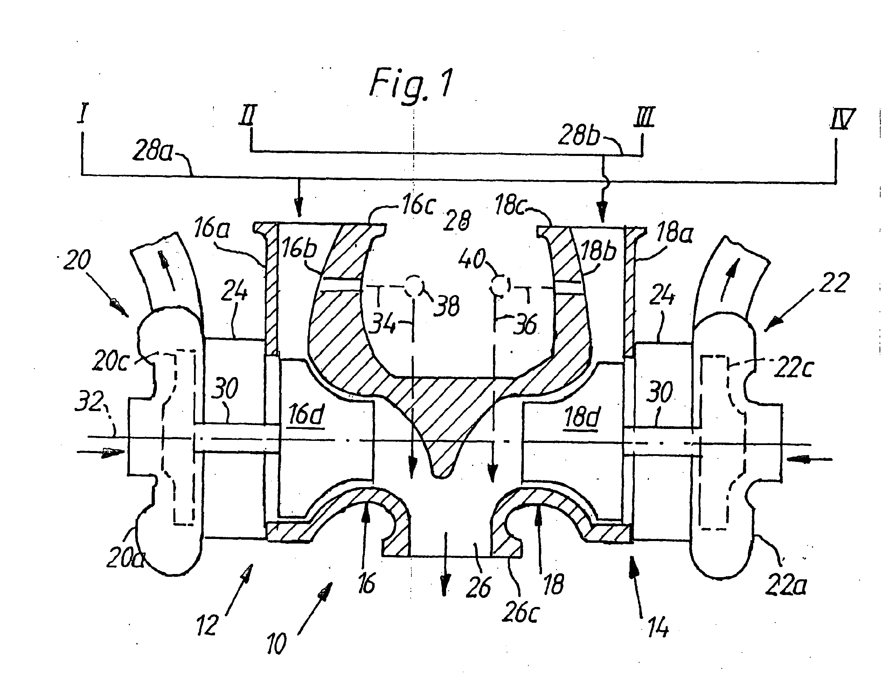

In der Fig. 1 ist mit 10 eine Anordnung bezeichnet, die sich im wesentlichen zusammensetzt aus einem ersten Abgasturbolader 12 und einem zweiten Abgasturbolader 14, die sich jeweils aus einer Abgasturbine 16, 18, einem Verdichter 20, 22 und jeweils einem dazwischen befindlichem Lagergehäuse 24 zusammensetzen. Die Abgasturbolader 12, 14 sind sowohl baulich als auch hinsichtlich ihrer thermodynamischen Auslegung im wesentlichen gleich ausgeführt.

Die beiden Abgasturbolader 12, 14 sind über die Baueinheit aus dem ersten Turbinengehäuse 16a und dem zweiten Turbinengehäuse 18a miteinander verbunden, wobei diese Turbinengehäuse entsprechend zusammengegossen sind.

In den Turbinengehäusen 16a, 18a sind in bekannter Weise je ein radialer Einströmkanal 16b, 18b und ein gemeinsamer Abströmkanal 26 ausgebildet, die soweit nicht dargestellt in der bei Abgasturboladern üblichen Konfiguration gestaltet sind.

An die besagten Kanäle 16b, 18b, 26 schließt jeweils in bekannter Weise ein Anschlussflansch 16c, 18c, 26c für den Anschluss eines Abgaskrümmers (Linien 28a, 28b) zur abgasseitigen Verbindung mit den Zylindern l bis IV der nicht dargestellten Vierzylinder-Reihenbrennkraftmaschine und mit dem nicht dargestellten, in die Atmosphäre mündendem Abgasleitungssystem der Brennkraftmaschine an. Dabei sind über die Einzelleitungen 28a und 28b getrennt voneinander die Zylinder I und IV sowie die Zylinder II und lll zusammengeschaltet und beaufschlagen entweder die Abgasturbine 16 oder 18. Der Zündabstand der strömungstechnisch zusammengefassten Zylinder beträgt dabei jeweils 360 Kurbelwellen-Grade. Die jeweiligen Einzelleitungen 28a, 28b des Abgaskrümmers könnten auch unmittelbar an die entsprechenden Turbinengehäuse 16a, 18a angegossen sein.

Die Anordnung ist grundsätzlich ab Zylindern, d.h. insbesondere auch bei 6 oder mehr Zylindern möglich und soll entsprechend von der Anmeldung umfasst sein.

Angrenzend an die Abgasturbinen 16, 18 sind einander entgegengesetzt jeweils das Lagergehäuse 24 und das Verdichtergehäuse 20a bzw. 22a der Verdichter 20, 22 angeordnet. Die benannten Gehäuse können separat oder aber auch als zwei Baueinheiten mit jeweils einem Lagergehäuse 24 und einem Verdichtergehäuse 20a bzw. 22a ausgeführt sein.

In dem Lagergehäuse 24 ist jeweils eine Antriebswelle 30 drehbar gelagert, die einerseits die in die Turbinengehäuse 16a, 18a einragenden Abgasturbinen 16d, 18d und die in die Verdichtergehäuse 20a, 22a einragenden Verdichter-Laufräder 20c, 22c trägt. Die Antriebswellen 30 liegen wie ersichtlich in einer Flucht (gemeinsame Drehmittelachse 32). Die verdichterseitigen Ein- und Ausströmkanäle in den Verdichtergehäusen 20a, 22a sind in bekannter Weise ausgeführt und deshalb nicht näher dargestellt.

Wie in der Fig. 1 schematisch dargestellt, sind beide Abgasturbinen 16, 18 mit je einem waste gate bestehend aus einer Bypassleitung 34, 36 (nur gestrichelt angedeutet) und einem Bypassventil 38, 40 versehen, mittels denen Abgas aus den Einströmkanälen 16 b, 18b an den Abgasturbinen 16d, 18d vorbei in den Ausströmkanal 26 ableitbar ist. Damit kann in bekannter Weise der Ladedruck der Brennkraftmaschine in den nicht dargestellten Verbrennungsluftleitungen stromauf der Verdichter 20, 22 geregelt werden.
Die Bypassleitungen 34, 36 sowie ggf. die Bypassventile 38, 40 sind unmittelbar als Kanäle in die Turbinengehäuse 16a, 18a integriert .

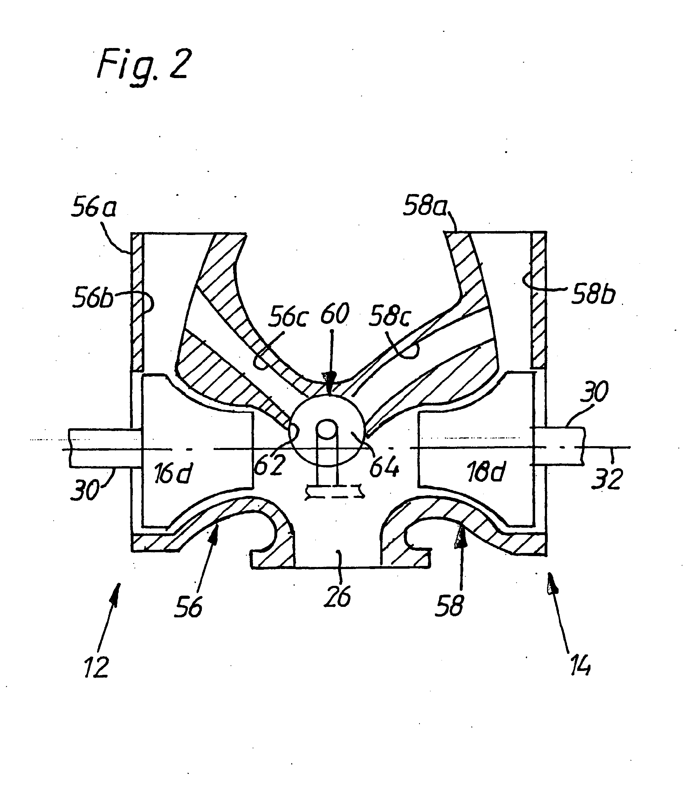

In der Fig. 2 ist eine weitere Ausführungsform beschrieben, wobei die nicht dargestellten Bauteile identisch den in der Fig. 1 beschriebenen sein können. Gleiche Teile sind mit gleichen Bezugszeichen versehen.

Gemäß Fig. 2 sind in das baueinheitliche Turbinengehäuse 56a, 58a der Abgasturbinen 56, 58 abzweigend von den Einströmkanälen 56b, 58b Bypasskanäle 56c, 58c integriert. Die Bypasskanäle 56c, 58c sind im Bereich eines ebenfalls integrierten Bypassventiles 60 etwa mittig des Ausströmkanales 26 zusammengeführt und münden in eine Öffnung 62 des gemeinsamen Ausströmkanales 26, die durch eine bewegliche Klappe 64 des Bypassventiles 60 auf und zu steuerbar ist. Das Bypassventil 60 kann im übrigen bekannter Bauart sein.

Dementsprechend kann über das gemeinsame Bypassventil 60 und die Bypassleitungen 56c, 58 c Abgas in bekannter Weise zur Regelung des Ladedruckes der Brennkraftmaschine an den Abgasturbinen 16d, 18d vorbeigeleitet bzw. in das nachgeschaltete Abgasleitungssystem abgeleitet werden.

## Patentansprüche

1. Anordnung zweier Abgasturbolader (12, 14) an einer Brennkraftmaschine mit mehreren Zylindern, insbesondere in einem Kraftfahrzeug, bei der die zwei Turbinengehäuse (16a, 18a 56a, 58a) an das Abgassystem der Brennkraftmaschine angeschlossen und einander unmittelbar benachbart sind und die jeweils eine Turbine (16, 18) mittels einer Antriebswelle (30) mit je einem Verdichter (20, 22) verbunden ist, wobei die Antriebswellen (30) in entsprechenden Lagergehäusen (24) drehbar gelagert sind, und wobei die Turbinengehäuse (16a, 18a 56a, 58a) derart ausgerichtet sind, dass die Antriebswellen (30) zumindest im wesentlichen in einer Flucht (32) zueinander liegen und die Lagergehäuse (24) beiderseits an die Turbinengehäuse (16a, 18a 56a, 58a) anschließen,
**dadurch gekennzeichnet,**
**dass** beide Abgasturbolader (12, 14) zur einheitlichen Ladedruckregelung mit je einer in die Turbinengehäuse (16a, 18a) (56a, 58a) integrierten, von den Einströmkanälen (16b, 18b 56b, 58b) abzweigenden Bypassleitung (56c, 58c) versehen sind, die im Bereich eines einzigen Bypassventiles (60) zusammengeführt sind.

2. Anordnung nach Anspruch 1, **dadurch gekennzeichnet, dass** die Turbinengehäuse (16a, 18a 56a, 58a) zu einer Baueinheit zusammengegossen sind.

3. Anordnung nach Anspruch 1 oder 2, **dadurch gekennzeichnet, dass** die Einströmkanäle (16b, 18b 56b, 58b) der Turbinengehäuse (16a, 18a 56a, 58a) über voneinander getrennte Abgasleitungen (28a, 28b) mit bestimmten Zylindern der Brennkraftmaschine verbunden sind.

4. Anordnung nach Anspruch 3, **dadurch gekennzeichnet, dass** bei einer Vierzylinder-Reihen-Brennkraftmaschine der eine Einströmkanal (16b 56b) mit zwei Zylindern (I und IV) und der andere Einströmkanal (18b, 58b) mit den anderen zwei Zylindern (II und III) verbunden ist, wobei der Zündabstand zwischen den jeweils abgasseitig zusammengeschalteten Zylindern jeweils 360 Grad (Kurbelwelle) beträgt.

5. Anordnung nach einem oder mehreren der Ansprüche 1 bis 4, **dadurch gekennzeichnet, dass** die Turbinengehäuse (16a, 18a, 56a, 58a) einen einheitlichen Abströmkanal (26) für das Abgas zu einer stromab liegenden Abgasleitung aufweisen.

6. Anordnung nach einem der Ansprüche 1 bis 5, **dadurch gekennzeichnet, dass** die in die Turbinengehäuse (16a, 18a, 56a, 58a) integrierten, von den Einströmkanälen (16b, 18b, 56b, 58b) abzweigenden Bypassleitungen (56c, 58c) und etwa mittig zwischen den beiden Turbinengehäusen (16a, 18a, 56a, 58a) zusammengeführt sind, und dass das Bypassventil (60) mit seiner Ventilöffnung (62) in den Abströmkanal (26) stromab der Abgasturbinen (16c, 18c) mündet.

## Claims

1. Arrangement of two exhaust gas turbochargers (12, 14) on an internal combustion engine with a plurality of cylinders, in particular in a motor vehicle, in which the two turbine housings (16a, 18a; 56a, 58a) are connected to the exhaust system of the internal combustion engine and are directly adjacent to one another, and each turbine (16, 18) is connected to a respective compressor (20, 22) by means of a drive shaft (30), the drive shafts (30) being mounted rotatably in corresponding bearing housings (24), and the turbine housings (16a, 18a; 56a, 58a) being oriented in such a manner that the drive shafts (30) are at least substantially in alignment (32) with one another and the bearing housings (24) adjoin the turbine housings (16a, 18a; 56a, 58a) on both sides, **characterised in that** for unified charge pressure control each exhaust gas turbocharger (12, 14) is provided with a respective bypass line (56c, 58c) integrated in the turbine housings (16a, 18a; 56a, 58a) and branching from the inflow channels (16b, 18b; 56b, 58b), which bypass lines (56c, 58c) are brought together in the region of a single bypass valve (60).

2. Arrangement according to Claim 1, **characterised in that** the turbine housings (16a, 18a; 56a, 58a) are cast together to form one constructional unit.

3. Arrangement according to Claim 1 or 2, **characterised in that** the inflow channels (16b, 18b; 56b, 58b) of the turbine housings (16a, 18a; 56a, 58a) are connected via separate exhaust gas lines (28a, 28b) to particular cylinders of the internal combustion engine.

4. Arrangement according to Claim 3, **characterised in that** in an in-line four-cylinder internal combustion engine the one inflow channel (16b; 56b) is connected to two cylinders (I and IV) and the other the inflow channel (18b; 58b) is connected to the other two cylinders (II and III), the ignition interval between the respective cylinders connected together on the exhaust side being 360° (crankshaft) in each case.

5. Arrangement according to one or more of Claims 1 to 4, **characterised in that** the turbine housings (16a, 18a; 56a, 58a) have a unified outflow channel (26) for the exhaust gas to an exhaust gas line located downstream.

6. Arrangement according to any one of Claims 1 to 5, **characterised in that** the bypass lines (56c, 58c) integrated in the turbine housings (16a, 18a; 56a, 58a) and branching from the inflow channels (16b, 18b; 56b, 58b) are brought together approximately centrally between the two turbine housings (16a, 18a; 56a, 58a), and **in that** the valve opening (62) of the bypass valve (60) opens into the outflow channel (26) downstream of the exhaust gas turbines (16c, 18c).

## Revendications

1. Agencement de deux turbocompresseurs (12, 14) sur un moteur à combustion interne avec plusieurs cylindres, en particulier dans un véhicule automobile, pour lequel les deux cylindres de turbine (16a, 18a, 56a, 58a) sont raccordés au système d'échappement du moteur à combustion interne et sont contigus directement l'un à l'autre et chaque turbine (16, 18) est reliée au moyen d'un arbre d'entraînement (30) à un compresseur (20, 22), les arbres d'entraînement (30) étant logés à rotation dans des logements de palier (24) correspondants, et les cylindres de turbine (16a, 18a, 56a, 58a) étant orientés de sorte que les arbres d'entraînement (30) se trouvent au moins essentiellement en alignement (32) l'un par rapport à l'autre et les logements de palier (24) se raccordent de part et d'autre aux cylindres de turbine (16a, 18a, 56a, 58a),
**caractérisé en ce que**
les deux turbocompresseurs (12, 14) sont pourvus pour la régulation de pression de suralimentation uniforme, d'une conduite de dérivation (56c, 58c) intégrée dans les cylindres de turbine (16a, 18a, 56a, 58a), bifurquant des canaux d'admission (16b, 18b, 56b, 58b), qui sont réunis dans la zone d'une seule soupape de dérivation (60).

2. Agencement selon la revendication 1, **caractérisé en ce que** les cylindres de turbine (16a, 18a, 56a, 58a) sont coulés ensemble pour former une unité de construction.

3. Agencement selon la revendication 1 ou 2, **caractérisé en ce que** les canaux d'admission (16b, 18b, 56b, 58b) des cylindres de turbine (16a, 18a, 56a, 58a) sont reliés par des conduites d'échappement (28a, 28b) séparées l'une de l'autre à certains cylindres du moteur à combustion interne.

4. Agencement selon la revendication 3, **caractérisé en ce que** pour un moteur à combustion interne à quatre cylindres en ligne, un canal d'admission (16b, 56b) est relié à deux cylindres (I et IV) et l'autre canal d'admission (18b, 58b) est relié aux deux autres cylindres (II et III), l'écart d'allumage entre les cylindres interconnectés respectivement côté échappement s'élevant chaque fois à 360 degrés (vilebrequin).

5. Agencement selon l'une des revendications 1 à 4, **caractérisé en ce que** les cylindres de turbine (16a, 18a, 56a, 58a) présentent un canal de flux sortant (26) uniforme pour les gaz d'échappement menant à une conduite d'échappement se trouvant en aval.

6. Agencement selon l'une des revendications 1 à 5, **caractérisé en ce que** les conduites de dérivation (56c, 58c) intégrées dans les cylindres de turbine (16a, 18a, 56a, 58a), bifurquant des canaux d'admission (16b, 18b, 56b, 58b) sont réunies à peu près au milieu entre les deux cylindres de turbine (16a, 18a, 56a, 58a) et **en ce que** la soupape de dérivation (60) débouche avec son ouverture de soupape (62) dans le canal de flux sortant (26) en aval des turbines à gaz d'échappement (16c, 18c).
